# EUROPEAN PATENT APPLICATION

(11) **EP 4 755 496 A1**
(43) Date of publication of application: **10.06.2026**
(21) Application number: 24862758.0
(22) Date of filing: 02.09.2024
(51) Int. Cl.: B01D 53/62, B01D 53/14, C01B 3/22, C01B 32/05, C01B 32/50, C01B 32/60, B01J 31/02

(54) **GAS TREATMENT METHOD AND CARBON DIOXIDE TREATMENT METHOD**

(30) Priority: 04.09.2023 JP 2023143084
(71) Applicant: INPEX Corporation, Tokyo 107-6332 (JP)
(72) Inventor: SANO, Yosuke, Tokyo 107-6332 (JP); AKATSUKA, Hiroki, Tokyo 107-6332 (JP)
(74) Representative: Grünecker Patent- und Rechtsanwälte PartG mbB
(86) International application number: PCT/JP2024/031475
(87) International publication number: WO 2025/053106

(57) **Abstract**

A gas treatment method including: (a) a step of reacting a gas containing carbon monoxide with a hydrocarbon compound having a hydroxy group to obtain a formic acid ester; (b) a step of transporting the formic acid ester from a first place to a second place; (c) a step of hydrolyzing the transported formic acid ester to obtain a mixture containing formic acid, a hydrocarbon compound having a hydroxy group, and water; (d) a step of decomposing the formic acid in the mixture to obtain carbon dioxide and hydrogen; and (e) a step of fixing the carbon dioxide.

## Description

### Technical Field

The present invention relates to a gas treatment method and a carbon dioxide treatment method.

### Background Art

Formic acid (HCOOH) has attracted attention as a carbon dioxide (CO₂) carrier for transporting carbon dioxide to a place where carbon dioxide is stored (carbon dioxide storage site), because the carbon dioxide content by mass per molecule is very high, at about 96 mass %.

For example, carbon monoxide discharged from a steel mill or the like is sometimes reacted with methanol and water to form formic acid, and then the formic acid is transported to a carbon dioxide storage site as a carbon dioxide carrier. Formic acid is then decomposed into hydrogen and carbon dioxide, and in order to suppress an increase in the concentration of carbon dioxide in the atmosphere, a process (CCS; Carbon dioxide Capture and Storage) is under study in which the carbon dioxide generated by the decomposition is recovered and stored underground. In CCS, for example, after carbon dioxide is absorbed into an alkaline aqueous solution such as an amine, a gas containing carbon dioxide at a high concentration is recovered by heating the aqueous solution that has absorbed carbon dioxide, and the recovered gas is stored underground. For example, Patent Literature 1 discloses a method and an apparatus for recovering carbon dioxide.

### Citation List

### Patent Literature

[Patent Literature 1] Japanese Unexamined Patent Publication No. 2012-110805

### Summary of Invention

### Technical Problem

As described above, formic acid has attracted attention as a carbon dioxide carrier, but since formic acid is highly toxic and highly corrosive, it is necessary to appropriately select a container for transporting formic acid, and care must be taken in handling.

In addition, the reaction of reacting carbon monoxide with water to obtain formic acid is carried out in the following two steps, and although the conversion rate of carbon monoxide in step 1 is high, generally, the conversion rate of methyl formate in step 2 is low, and in order to promote the reaction of step 2, a large amount of water, about 2 to 10 times the stoichiometric amount of the reaction, is required. However, since the formic acid generated by the reaction of step 2 forms an azeotropic mixture with water, an enormous amount of energy is required in order to concentrate formic acid from a mixture of formic acid and water.

(Step 1) CO + CH₃OH <=> HCOOCH₃

(Step 2) HCOOCH₃ + H₂O <=> HCOOH + CH₃OH

In view of the above circumstances, an aspect of the present invention is to provide a gas treatment method that is easy to handle during transportation and also has excellent energy efficiency. Another aspect of the present invention is to provide a gas treatment method and a carbon dioxide treatment method that constitute part of the above method.

### Solution to Problem

A gas treatment method according to one aspect of the present invention includes the following steps.
(a) A step of reacting a gas containing carbon monoxide with a hydrocarbon compound having a hydroxy group to obtain a formic acid ester.
(b) A step of transporting the formic acid ester from a first place to a second place.
(c) A step of hydrolyzing the transported formic acid ester to obtain a mixture containing formic acid, a hydrocarbon compound having a hydroxy group, and water.
(d) A step of decomposing the formic acid in the mixture to obtain carbon dioxide and hydrogen.
(e) A step of fixing the carbon dioxide.

Another aspect of the gas treatment method according to the present invention includes the following steps.
(a) A step of reacting a gas containing carbon monoxide with a hydrocarbon compound having a hydroxy group to obtain a formic acid ester.
(b) A step of transporting the formic acid ester from a first place to a second place.
(c) A step of hydrolyzing the transported formic acid ester to obtain a mixture containing formic acid, a hydrocarbon compound having a hydroxy group, and water.
(d) A step of decomposing the formic acid in the mixture to obtain carbon dioxide and hydrogen.
(e) A step of producing a valuable material using the carbon dioxide.

According to the gas treatment method according to one aspect of the present invention, since a formic acid ester having lower toxicity and lower corrosiveness than formic acid is transported, handling during transportation is easy. Further, according to the gas treatment method according to one aspect of the present invention, since the formic acid ester is hydrolyzed to obtain formic acid and then the formic acid in the mixture containing formic acid and water is decomposed, there is no need to concentrate formic acid, and energy efficiency is excellent.

### Advantageous Effects of Invention

According to one aspect of the present invention, it is possible to provide a gas treatment method that is easy to handle during transportation and has excellent energy efficiency. Further, according to another aspect of the present invention, it is possible to provide a gas treatment method and a carbon dioxide treatment method that constitute part of the above method.

### Brief Description of Drawings

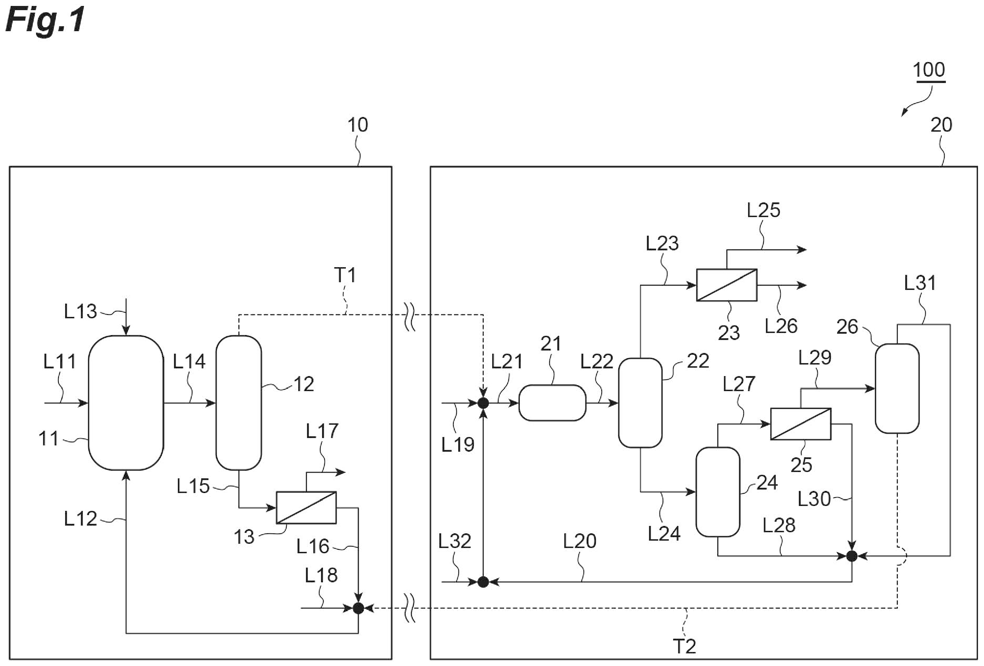

[FIG. 1] FIG. 1 is a configuration diagram showing an example of a gas treatment facility according to the present invention.

### Description of Embodiments

Hereinafter, embodiments of the present invention will be described in detail with reference to the drawings. In the following description, the same reference numerals are given to the same or corresponding parts, and redundant description is omitted.

### [Gas Treatment Facility]

FIG. 1 is a configuration diagram showing an example of a gas treatment facility according to the present invention. A gas treatment facility 100 shown in FIG. 1 is divided into a first place side and a second place side.

A treatment facility 10 is present on the first place side. The treatment facility 10 includes a reactor 11, a separator 12, and a separator 13.

A gas containing carbon monoxide is transferred to the reactor 11 through a transfer pipe L11. The reactor 11 is a device that brings carbon monoxide and a hydrocarbon compound having a hydroxy group into contact with each other in the presence of a catalyst, and generates a formic acid ester from the carbon monoxide contained in the gas. Examples of the hydrocarbon compound having a hydroxy group include monohydric alcohols such as methanol, ethanol, and propanol, and dihydric alcohols such as methanediol and ethylene glycol. Examples of the formic acid ester include methyl formate, ethyl formate, and propyl formate. From the viewpoint of being excellent as a carbon dioxide carrier, the formic acid ester is preferably methyl formate. When the hydrocarbon compound having a hydroxy group is methanol, the reactor 11 generates methyl formate by the following reaction (A).

CO + CH₃OH <=> HCOOCH₃ ... (A)

The gas may be, for example, an exhaust gas discharged from a steel mill or the like. The gas contains at least carbon monoxide. The gas may further contain components other than carbon monoxide (for example, sulfur oxides (SO_{X}), nitrogen oxides (NO_{X})). When the gas contains sulfur oxides and/or nitrogen oxides, a device (for example, an adsorption device) that absorbs sulfur oxides and/or nitrogen oxides in the gas may be provided before the reactor 11.

The reaction in the reactor 11 may be carried out under heating and pressurizing conditions. For example, the reaction may be carried out under conditions of a reaction temperature of 70 to 90 °C and a pressure of 3 to 6 GPa.

A transfer pipe L12 and a transfer pipe L13 are connected to the reactor 11. The transfer pipe L12 transfers a hydrocarbon compound having a hydroxy group, and the transfer pipe L13 transfers a catalyst. Examples of the catalyst transferred through the transfer pipe L13 include sodium methoxide.

The formic acid ester generated in the reactor 11 is transferred to the separator 12 through a transfer pipe L14. The formic acid ester transferred through the transfer pipe L14 may be in a liquid state or may be in a gaseous state. In the reactor 11, an unreacted hydrocarbon compound having a hydroxy group is also transferred to the separator 12 through the transfer pipe L14.

The separator 12 is a device that separates the formic acid ester generated in the reactor 11 and components other than the formic acid ester (for example, a hydrocarbon compound having a hydroxy group and a catalyst). The separator 12 may be, for example, a gas-liquid distillation apparatus. A transfer pipe L15 is connected to the separator 12. Further, a device (not shown) that separates unreacted carbon monoxide and the formic acid ester may be provided before or after the separator 12. For example, when the formic acid ester is methyl formate, a separator may be provided before the T1 line of the separator 12.

The formic acid ester separated by the separator 12 is transported from the first place to the second place by a transportation means T1. The formic acid ester to be transported may consist essentially of the formic acid ester, or may be a mixture containing components other than the formic acid ester (for example, a hydrocarbon compound having a hydroxy group). Examples of the transportation means T1 include a ship, a diesel locomotive, a railway, and a truck. The transport of the formic acid ester may be carried out at normal temperature and normal pressure, may be carried out at normal temperature and increased pressure, may be carried out at low temperature and normal pressure, or may be carried out at low temperature and increased pressure. The first place may be, for example, a carbon dioxide recovery place. The second place may be a carbon dioxide fixing place, or may be a place where a valuable material generated from carbon dioxide is used or consumed. The first place may be a region, a country, or the like having a larger amount of carbon dioxide emission than the second place, or may be a region, a country, or the like having a smaller amount of carbon dioxide emission. The second place may be a region, a country, or the like having a larger amount of carbon dioxide fixation capacity than the first place.

The hydrocarbon compound having a hydroxy group, the catalyst, and the like separated by the separator 12 are transferred to the separator 13 through the transfer pipe L15. The hydrocarbon compound having a hydroxy group transferred through the transfer pipe L15 may be in a liquid state.

The separator 13 is a device that separates the hydrocarbon compound having a hydroxy group transferred through the transfer pipe L15 and components other than the hydrocarbon compound having a hydroxy group (for example, a catalyst). The separator 13 may be, for example, a membrane separation device. A transfer pipe L16 and a transfer pipe L17 are connected to the separator 13. The transfer pipe L16 mainly transfers the hydrocarbon compound having a hydroxy group, and the transfer pipe L17 mainly transfers components other than the hydrocarbon compound having a hydroxy group.

The hydrocarbon compound having a hydroxy group transferred through the transfer pipe L16 is mixed with a hydrocarbon compound having a hydroxy group supplied through a transfer pipe L18 and a hydrocarbon compound having a hydroxy group transported by a transportation means T2 described later, and then transferred to the reactor 11 through the transfer pipe L12 and recycled.

The formic acid ester transported by the transportation means T1 is transported, for example, to a treatment facility 20 at the second place. The treatment facility 20 includes a reactor 21 and separators 22 to 26. The formic acid ester transported by the transportation means T1, after being transported to the treatment facility 20, is mixed with a catalyst transferred through a transfer pipe L19 and water transferred through a transfer pipe L20. A mixture of the formic acid ester, the catalyst, and water is transferred to the reactor 21 through a transfer pipe L21. The amount of the catalyst transferred through the transfer pipe L19 may be adjusted in accordance with the amount of the catalyst to be recycled.

The reactor 21 is a device that hydrolyzes the formic acid ester to generate formic acid and a hydrocarbon compound having a hydroxy group and, at the same time, decomposes the formic acid into carbon dioxide and hydrogen in the presence of a catalyst. When the formic acid ester is methyl formate, the reactor 21 generates methanol, carbon dioxide, and hydrogen from methyl formate by the following reactions (B) and (C).

HCOOCH₃ + H₂O <=> CH₃OH + HCOOH ... (B)

HCOOH → H₂ + CO₂ ... (C)

In the reactor 21, when formic acid is generated by hydrolysis of the formic acid ester, the reaction (C) proceeds. In particular, since the reaction (C) is promoted by using a catalyst, the equilibrium state is shifted to the side where the formic acid ester is consumed to generate formic acid (the right side in the reaction (B)), and the hydrolysis reaction of the formic acid ester is promoted. Further, since the hydrolysis reaction of the formic acid ester is promoted, the hydrolysis reaction easily proceeds without excessively supplying water.

The reaction in the reactor 21 may be carried out under conditions of normal temperature and normal pressure, may be carried out under conditions of normal temperature and increased pressure, may be carried out under conditions of heating and normal pressure, or may be carried out under conditions of heating and increased pressure. For example, the reaction may be carried out under conditions of a reaction temperature of normal temperature (20 °C) to 100 °C and increased pressure. Further, when the reactor is sealed, hydrogen and carbon dioxide are generated as the decomposition reaction of formic acid proceeds, and the pressure in the reactor is increased, but the hydrolysis of the formic acid ester and the decomposition of the formic acid may be carried out in the reactor which is pressurized by hydrogen and carbon dioxide (that is, under increased pressure conditions).

In the reactor 21, as the hydrolysis of the formic acid ester and the decomposition of the formic acid proceed, carbon dioxide and hydrogen are generated, and the pressure inside the reactor 21 increases. In particular, since the reaction (C) is promoted by using a catalyst, the pressure inside the reactor 21 easily increases. For these reasons, the reactor 21 may be a pressure-resistant vessel. The pressure due to the increase in pressure inside the reactor 21 may be used when fixing carbon dioxide.

As the catalyst, for example, catalysts described in Japanese Patent No. 5390389, Japanese Patent No. 4572393, International Publication No. 2012-070620, and Japanese Patent No. 6502091 can be used.

A transfer pipe L22 is connected to the reactor 21. The transfer pipe L22 transfers, for example, the formic acid ester, the hydrocarbon compound having a hydroxy group, carbon dioxide, hydrogen, water, and the catalyst to the separator 22.

The separator 22 is a device that separates the carbon dioxide and hydrogen generated in the reactor 21 and components other than carbon dioxide and hydrogen (for example, formic acid ester and the like). The separator 22 may be, for example, a gas-liquid distillation apparatus. A transfer pipe L23 and a transfer pipe L24 are connected to the separator 22.

The transfer pipe L23 is a transfer pipe that transfers carbon dioxide and hydrogen to a separator 23. The separator 23 is a device that separates carbon dioxide and hydrogen. The separator 23 may be, for example, a membrane separation device. A transfer pipe L25 and a transfer pipe L26 are connected to the separator 23. The transfer pipe L25 is a transfer pipe that mainly transfers carbon dioxide, and the transfer pipe L26 is a transfer pipe that mainly transfers hydrogen.

The carbon dioxide transferred through the transfer pipe L25 is transported by, for example, a pipeline (not shown) or the like and appropriately treated. The carbon dioxide transferred through the transfer pipe L25 may be fixed in the ground, minerals, and the like. Further, the carbon dioxide transferred through the transfer pipe L25 may be used to generate valuable materials such as carbon and carbonates.

Publicly known methods can be applied as a method of fixing carbon dioxide and a method of generating a valuable material using carbon dioxide. In these methods, in order to increase the purity of carbon dioxide before fixing carbon dioxide, the carbon dioxide transferred through the transfer pipe L26 may be supplied to a separator (not shown) or the like.

The transfer pipe L24 is a transfer pipe that transfers the formic acid ester, the hydrocarbon compound having a hydroxy group, water, and the catalyst to a separator 24. The separator 24 is a device that separates the formic acid ester, the hydrocarbon compound having a hydroxy group, and water from water and the catalyst. The separator 24 may be, for example, a gas-liquid distillation apparatus. A transfer pipe L27 and a transfer pipe L28 are connected to the separator 24. The transfer pipe L27 is a transfer pipe that mainly transfers the formic acid ester, the hydrocarbon compound having a hydroxy group, and water, and the transfer pipe L28 is a transfer pipe that mainly transfers water and the catalyst.

The transfer pipe L27 is a transfer pipe that transfers the formic acid ester, the hydrocarbon compound having a hydroxy group, and water to a separator 25. The separator 25 is a device that separates the formic acid ester and the hydrocarbon compound having a hydroxy group from water. The separator 25 may be, for example, a membrane separation device. A transfer pipe L29 and a transfer pipe L30 are connected to the separator 25. The transfer pipe L29 is a transfer pipe that mainly transfers the formic acid ester and the hydrocarbon compound having a hydroxy group, and the transfer pipe L30 is a transfer pipe that mainly transfers water.

The transfer pipe L29 is a transfer pipe that transfers the formic acid ester and the hydrocarbon compound having a hydroxy group to a separator 26. The separator 26 is a device that separates the formic acid ester and the hydrocarbon compound having a hydroxy group. The separator 26 may be, for example, a gas-liquid distillation apparatus. A transfer pipe L31 is connected to the separator 26. The transfer pipe L31 is a transfer pipe that mainly transfers the formic acid ester. The formic acid ester transferred by the transfer pipe L31 is mixed with the water and catalyst transferred by the transfer pipe L28 and the water transferred by the transfer pipe L30. Thereafter, a mixture containing the formic acid ester, water, and the catalyst is transferred through the transfer pipe L20, and after being mixed with water transferred through a transfer pipe L32, is recycled. The amount of water transferred through the transfer pipe L32 may be adjusted in accordance with the amount of water to be recycled.

The hydrocarbon compound having a hydroxy group separated by the separator 26 is transported from the second place to the first place by the transportation means T2. The hydrocarbon compound having a hydroxy group to be transported may consist essentially of the hydrocarbon compound having a hydroxy group, or may be a mixture containing components other than the hydrocarbon compound having a hydroxy group (for example, a formic acid ester). Examples of the transportation means T2 include a ship, a diesel locomotive, a railway, and a truck. The transport of the hydrocarbon compound having a hydroxy group may be carried out at normal temperature and normal pressure. The first place may be, for example, a carbon dioxide recovery place. The second place may be a carbon dioxide fixing place, or may be a place where a valuable material generated from carbon dioxide is used or consumed. The first place may be a region, a country, or the like having a larger amount of carbon dioxide emission than the second place, or may be a region, a country, or the like having a smaller amount of carbon dioxide emission. The second place may be a region, a country, or the like having a larger amount of carbon dioxide fixation capacity than the first place.

According to the gas treatment facility 100, since a formic acid ester having lower toxicity and lower corrosiveness than formic acid is transported, handling during transportation is easy. Further, according to the gas treatment facility 100, since the formic acid ester is hydrolyzed to obtain formic acid and then the formic acid in the mixture containing formic acid and water is decomposed, there is no need to concentrate formic acid, and energy efficiency is excellent.

### [Gas Treatment Method]

A method of using the gas treatment facility 100 to recover carbon monoxide in a gas and fix carbon dioxide will be described. That is, one embodiment of the present invention is a gas treatment method including at least the following steps.
(a) A step of reacting a gas containing carbon monoxide with a hydrocarbon compound having a hydroxy group to obtain a formic acid ester.
(b) A step of transporting the formic acid ester obtained in the step (a) from a first place to a second place.
(c) A step of hydrolyzing the formic acid ester after being transported in the step (b) to obtain a mixture containing formic acid, a hydrocarbon compound having a hydroxy group, and water.
(d) A step of decomposing the formic acid in the mixture obtained in the step (c) to obtain carbon dioxide and hydrogen.
(e) A step of fixing the carbon dioxide obtained in the step (d).

Further, carbon monoxide in a gas may be recovered using the gas treatment facility 100, and a valuable material may be generated using carbon dioxide. That is, another embodiment of the present invention is a gas treatment method including at least the following steps. These gas treatment methods may refer to the above description concerning the gas treatment facility.
(a) A step of reacting a gas containing carbon monoxide with a hydrocarbon compound having a hydroxy group to obtain a formic acid ester.
(b) A step of transporting the formic acid ester obtained in the step (a) from a first place to a second place.
(c) A step of hydrolyzing the formic acid ester after being transported in the step (b) to obtain a mixture containing formic acid, a hydrocarbon compound having a hydroxy group, and water.
(d) A step of decomposing the formic acid in the mixture obtained in the step (c) to obtain carbon dioxide and hydrogen.
(e) A step of producing a valuable material using the carbon dioxide obtained in the step (d).

According to the gas treatment method of the present embodiment, since a formic acid ester having lower toxicity and lower corrosiveness than formic acid is transported, handling during transportation is easy. Further, according to the gas treatment method of the present embodiment, since the formic acid ester is hydrolyzed to obtain formic acid and then the formic acid in the mixture containing formic acid and water is decomposed, there is no need to concentrate formic acid, and energy efficiency is excellent.

### <Step (a)>

The step (a) is a step of reacting a gas containing carbon monoxide with a hydrocarbon compound having a hydroxy group to obtain a formic acid ester. The step (a) can also be referred to as a step of removing carbon monoxide from the gas. The step (a) may include the following steps.
(a1) A step of reacting a gas containing carbon monoxide with a hydrocarbon compound having a hydroxy group to obtain a mixture of a formic acid ester and a hydrocarbon compound having a hydroxy group.
(a2) A step of separating the mixture obtained in the step (a1) into the formic acid ester and the hydrocarbon compound having a hydroxy group to recover the formic acid ester.

The step (a1) is a step of bringing carbon monoxide and a hydrocarbon compound having a hydroxy group into contact with each other in the reactor 11 to react carbon monoxide in the gas with the hydrocarbon compound having a hydroxy group and obtain a mixture of the formic acid ester and the hydrocarbon compound having a hydroxy group. In the step (a1), from the viewpoint of promoting the reaction between carbon monoxide and the hydrocarbon compound having a hydroxy group, a catalyst may be added. The mixture may be in a liquid state or may be in a gaseous state. When the hydrocarbon compound having a hydroxy group is methanol, the reaction (A) below proceeds in the step (a1).

CO + CH₃OH <=> HCOOCH₃ ... (A)

The step (a2) is a step of separating the mixture into the formic acid ester and the hydrocarbon compound having a hydroxy group in the separator 12 and recovering the formic acid ester. The separation method may be, for example, gas-liquid distillation.

### <Step (b)>

The step (b) is a step of transporting the formic acid ester from the first place to the second place. The first place may be a carbon dioxide recovery place, and the second place may be a carbon dioxide fixing place. The first place may be a region, a country, or the like having a larger amount of carbon dioxide emission than the second place. The second place may be a carbon dioxide fixing place, or may be a place where a valuable material generated from carbon dioxide is used or consumed. The second place may be a region, a country, or the like having a larger amount of carbon dioxide fixation capacity than the first place. The formic acid ester may be transported by a ship, a diesel locomotive, a railway, or a truck. Since the formic acid ester has lower corrosiveness and lower toxicity than formic acid, the gas treatment method of the present invention is superior in safety and can reduce the management burden during transportation as compared with the case of transporting formic acid.

### <Step (c)>

The step (c) is a step of bringing the formic acid ester after transportation and water into contact with each other in the reactor 21 to hydrolyze the formic acid ester, thereby obtaining formic acid and a hydrocarbon compound having a hydroxy group. When the formic acid ester is methyl formate, the step (c) obtains formic acid and methanol from methyl formate after transportation. When the formic acid ester is methyl formate, the reaction (B) below proceeds in the step (c).

HCOOCH₃ + H₂O <=> CH₃OH + HCOOH ... (B)

### <Step (d)>

The step (d) is a step of decomposing the formic acid obtained in the step (c) in the reactor 21 to obtain carbon dioxide and hydrogen. In the step (d), the reaction (C) below proceeds.

HCOOH → H₂ + CO₂ ... (C)

In the step (d), from the viewpoint of promoting the reaction (C), a catalyst may be used. As the catalyst, for example, catalysts described in Japanese Patent No. 5390389, Japanese Patent No. 4572393, International Publication No. 2012-070620, and Japanese Patent No. 6502091 can be used. When formic acid is generated by hydrolysis of the formic acid ester in the step (c), the reaction (C) proceeds. In particular, since the reaction (C) is promoted by using a catalyst, the equilibrium state is shifted to the side where the formic acid ester is consumed to generate formic acid (the right side in the reaction (B)), and the hydrolysis reaction in the step (c) is promoted. Further, since the hydrolysis reaction in the step (c) is promoted, the hydrolysis reaction easily proceeds without excessively supplying water. Since the reactions (B) and (C) proceed successively, it is preferable to perform the step (c) and the step (d) in the same reactor.

### <Step (e)>

In one embodiment, the step (e) is a step of fixing the carbon dioxide obtained in the step (d). In another embodiment, the step (e) is a step of generating a valuable material using the carbon dioxide obtained in the step (d). Publicly known methods can be applied as a method of fixing carbon dioxide and a method of generating a valuable material using carbon dioxide.

The gas treatment method according to the present embodiment may further include the following steps.
(f) A step of transporting the hydrocarbon compound having a hydroxy group obtained in the step (c).
(g) A step of reacting the hydrocarbon compound having a hydroxy group after being transported in the step (f) with a gas containing carbon monoxide to obtain a formic acid ester.

### <Step (f)>

The step (f) is a step of transporting the hydrocarbon compound having a hydroxy group obtained in the above step (c). The transport of the hydrocarbon compound having a hydroxy group may be, for example, from the second place to the first place, or may be from the second place to a third place different from the first place. The hydrocarbon compound having a hydroxy group may be transported by a ship, a diesel locomotive, a railway, or a truck.

### <Step (g)>

The step (g) is a step of reacting the hydrocarbon compound having a hydroxy group after being transported in the step (f) with a gas containing carbon monoxide to obtain a formic acid ester. For example, the transported hydrocarbon compound having a hydroxy group may be used in the step (a), and the transported hydrocarbon compound having a hydroxy group may be transferred to the reactor 11 and reacted with a gas containing carbon monoxide to obtain a formic acid ester. That is, a gas treatment method according to another embodiment of the present invention is a gas treatment method including a step of reacting a hydrocarbon compound having a hydroxy group transported from the second place to the first place with a gas containing carbon monoxide to obtain a formic acid ester, and a step of transporting the formic acid ester from the first place to the second place.

### [Carbon Dioxide Treatment Method]

Another embodiment of the present invention is a carbon dioxide treatment method including at least the following steps.
(x) A step of hydrolyzing a formic acid ester to obtain a mixture containing formic acid, a hydrocarbon compound having a hydroxy group, and water.
(y) A step of decomposing the formic acid in the mixture to obtain carbon dioxide and hydrogen.
(z1) A step of fixing the carbon dioxide.

Another embodiment of the present invention is a carbon dioxide treatment method including at least the following steps. These carbon dioxide treatment methods may refer to the above description concerning the gas treatment facility and the gas treatment method.
(x) A step of hydrolyzing a formic acid ester to obtain a mixture containing formic acid, a hydrocarbon compound having a hydroxy group, and water.
(y) A step of decomposing the formic acid in the mixture to obtain carbon dioxide and hydrogen.
(z2) A step of producing a valuable material using the carbon dioxide.

### <Step (x)>

The step (x) is a step of bringing the formic acid ester after transportation and water into contact with each other in the reactor 21 to hydrolyze the formic acid ester, thereby obtaining formic acid and a hydrocarbon compound having a hydroxy group. When the formic acid ester is methyl formate, the step (x) obtains formic acid and methanol from methyl formate after transportation. When the formic acid ester is methyl formate, the reaction (B) below proceeds in the step (x).

HCOOCH₃ + H₂O <=> CH₃OH + HCOOH ... (B)

### <Step (y)>

The step (y) is a step of decomposing the formic acid in the mixture obtained in the step (x) in the reactor 21 to obtain carbon dioxide and hydrogen. In the step (y), the reaction (C) below proceeds.

HCOOH → H₂ + CO₂ ... (C)

In the step (y), from the viewpoint of promoting the reaction (C), a catalyst may be used. As the catalyst, for example, catalysts described in Japanese Patent No. 5390389, Japanese Patent No. 4572393, International Publication No. 2012-070620, and Japanese Patent No. 6502091 can be used. When formic acid is generated by hydrolysis of the formic acid ester in the step (x), the reaction (C) proceeds. In particular, since the reaction (C) is promoted by using a catalyst, the equilibrium state is shifted to the side where the formic acid ester is consumed to generate formic acid (the right side in the reaction (B)), so that the hydrolysis reaction in the step (x) is promoted. Further, since the hydrolysis reaction in the step (x) is promoted, the hydrolysis reaction easily proceeds without excessively supplying water. Since the reactions (B) and (C) proceed successively, it is preferable to perform the step (x) and the step (y) in the same reactor.

### <Step (z1), Step (z2)>

In one embodiment, the step (z1) is a step of fixing the carbon dioxide obtained in the step (y). In another embodiment, the step (z2) is a step of generating a valuable material using the carbon dioxide obtained in the step (y). Publicly known methods can be applied as a method of fixing carbon dioxide and a method of generating a valuable material using carbon dioxide.

The present invention includes, for example, the following inventions [1] to [11].
[1] A gas treatment method comprising:
   (a) a step of reacting a gas containing carbon monoxide with a hydrocarbon compound having a hydroxy group to obtain a formic acid ester;
   (b) a step of transporting the formic acid ester from a first place to a second place;
   (c) a step of hydrolyzing the transported formic acid ester to obtain a mixture containing formic acid, a hydrocarbon compound having a hydroxy group, and water;
   (d) a step of decomposing the formic acid in the mixture to obtain carbon dioxide and hydrogen; and
   (e) a step of fixing the carbon dioxide.
[2] A gas treatment method comprising:
   (a) a step of reacting a gas containing carbon monoxide with a hydrocarbon compound having a hydroxy group to obtain a formic acid ester;
   (b) a step of transporting the formic acid ester from a first place to a second place;
   (c) a step of hydrolyzing the transported formic acid ester to obtain a mixture containing formic acid, a hydrocarbon compound having a hydroxy group, and water;
   (d) a step of decomposing the formic acid in the mixture to obtain carbon dioxide and hydrogen; and
   (e) a step of producing a valuable material using the carbon dioxide.
[3] The gas treatment method according to [1] or [2], wherein the step (c) and the step (d) are performed in the same reactor.
[4] The gas treatment method according to any one of [1] to [3], wherein the step (d) is a step of decomposing the formic acid using a catalyst.
[5] The gas treatment method according to any one of [1] to [4], further comprising a step of transporting the hydrocarbon compound having a hydroxy group obtained in the step (c) from the second place to the first place.
[6] The gas treatment method according to [5], wherein the hydrocarbon compound having a hydroxy group transported from the second place to the first place is used in the reaction of the step (a).
[7] A gas treatment method comprising:
   a step of reacting a hydrocarbon compound having a hydroxy group transported from a second place to a first place with a gas containing carbon monoxide to obtain a formic acid ester; and
   a step of transporting the formic acid ester from the first place to the second place.
[8] A carbon dioxide treatment method comprising:
   (x) a step of hydrolyzing a formic acid ester to obtain a mixture containing formic acid, a hydrocarbon compound having a hydroxy group, and water;
   (y) a step of decomposing the formic acid in the mixture to obtain carbon dioxide and hydrogen; and
   (z1) a step of fixing the carbon dioxide.
[9] A carbon dioxide treatment method comprising:
   (x) a step of hydrolyzing a formic acid ester to obtain a mixture containing formic acid, a hydrocarbon compound having a hydroxy group, and water;
   (y) a step of decomposing the formic acid in the mixture to obtain carbon dioxide and hydrogen; and
   (z2) a step of producing a valuable material using the carbon dioxide.
[10] The carbon dioxide treatment method according to [8] or [9], wherein the step (x) and the step (y) are performed in the same reactor.
[11] The carbon dioxide treatment method according to [8] or [9], wherein the step (y) is a step of decomposing the formic acid using a catalyst.

### Reference Signs List

10, 20: treatment facility; 11, 21: reactor; 12, 13, 22, 23, 24, 25, 26: separator; T1, T2: transportation means; 100: gas treatment facility.

## Claims

1. A gas treatment method comprising:
(a) a step of reacting a gas containing carbon monoxide with a hydrocarbon compound having a hydroxy group to obtain a formic acid ester;
(b) a step of transporting the formic acid ester from a first place to a second place;
(c) a step of hydrolyzing the transported formic acid ester to obtain a mixture containing formic acid, a hydrocarbon compound having a hydroxy group, and water;
(d) a step of decomposing the formic acid in the mixture to obtain carbon dioxide and hydrogen; and
(e) a step of fixing the carbon dioxide.

2. A gas treatment method comprising:
(a) a step of reacting a gas containing carbon monoxide with a hydrocarbon compound having a hydroxy group to obtain a formic acid ester;
(b) a step of transporting the formic acid ester from a first place to a second place;
(c) a step of hydrolyzing the transported formic acid ester to obtain a mixture containing formic acid, a hydrocarbon compound having a hydroxy group, and water;
(d) a step of decomposing the formic acid in the mixture to obtain carbon dioxide and hydrogen; and
(e) a step of producing a valuable material using the carbon dioxide.

3. The gas treatment method according to claim 1 or 2, wherein the step (c) and the step (d) are performed in the same reactor.

4. The gas treatment method according to claim 1 or 2, wherein the step (d) is a step of decomposing the formic acid using a catalyst.

5. The gas treatment method according to claim 1 or 2, further comprising a step of transporting the hydrocarbon compound having a hydroxy group obtained in the step (c) from the second place to the first place.

6. The gas treatment method according to claim 5, wherein the hydrocarbon compound having a hydroxy group transported from the second place to the first place is used in the reaction of the step (a).

7. A gas treatment method comprising:
a step of reacting a hydrocarbon compound having a hydroxy group transported from a second place to a first place with a gas containing carbon monoxide to obtain a formic acid ester; and
a step of transporting the formic acid ester from the first place to the second place.

8. A carbon dioxide treatment method comprising:
(x) a step of hydrolyzing a formic acid ester to obtain a mixture containing formic acid, a hydrocarbon compound having a hydroxy group, and water;
(y) a step of decomposing the formic acid in the mixture to obtain carbon dioxide and hydrogen; and
(z1) a step of fixing the carbon dioxide.

9. A carbon dioxide treatment method comprising:
(x) a step of hydrolyzing a formic acid ester to obtain a mixture containing formic acid, a hydrocarbon compound having a hydroxy group, and water;
(y) a step of decomposing the formic acid in the mixture to obtain carbon dioxide and hydrogen; and
(z2) a step of producing a valuable material using the carbon dioxide.

10. The carbon dioxide treatment method according to claim 8 or 9, wherein the step (x) and the step (y) are performed in the same reactor.

11. The carbon dioxide treatment method according to claim 8 or 9, wherein the step (y) is a step of decomposing the formic acid using a catalyst.
